# EUROPÄISCHE PATENTSCHRIFT

(11) **EP 2 289 772 B1**
(45) Veröffentlichungstag und Bekanntmachung des Hinweises auf die Patenterteilung: **05.06.2013**
(21) Anmeldenummer: 10007982.1
(22) Anmeldetag: 30.07.2010
(51) Int. Cl.: B62D 27/02, B62D 29/00

(54) **Vorrichtung zur Verbindung eines Trägerlements mit einem Gussbauteil**
Device to join a carrier element to a cast component
Dispositif pour l'assemblage d'un élément porteur et une pièce coulée

(30) Priorität: 26.08.2009 DE 102009038893
(43) Veröffentlichungstag der Anmeldung: 02.03.2011
(73) Patentinhaber: Audi AG, 85045 Ingolstadt (DE)
(72) Erfinder: Urban, Tobias, 71254 Ditzingen-Hirschlanden (DE); Kühl, Sönke, 69120 Heidelberg (DE); Neufeldt, Christian, 74177 Bad Friedrichshall (DE); Holl, Werner, 74196 Neuenstadt (DE); Hornbostel, Norbert, 74388 Talheim (DE); Fischer, Wilhelm, 74172 Neckarsulm (DE)
(74) Vertreter: Patzelt, Heike Anna Maria

(56) Entgegenhaltungen:
- EP-A1- 0 733 541
- EP-A2- 1 840 007
- DE-A1-102006 041 091

## Beschreibung

Die Erfindung betrifft eine Vorrichtung zur Verbindung eines Trägerelements mit einem Gussbauteil in einer Karosserie eines Kraftfahrzeugs nach der im Oberbegriff von Anspruch 1 näher definierten Art.

Eine gattungsgemäße Vorrichtung ist aus der EP 1 840 007 A2 bekannt.

Aus dem allgemeinen Stand der Technik sind die verschiedensten Verbindungen zwischen Karosseriebauteilen bekannt, wobei in diesem Zusammenhang rein beispielhaft auf die EP 0 733 541 A1, die DE 10 2006 041 092 A1, die DE 195 37 817 A1 und die DE 44 07 501 A1 verwiesen wird.

Häufig wird ein Trägerelement, beispielsweise ein Längsträger, in eine an das Trägerelement angepasste, denselben vollständig umschließende Ausnehmung eines meist als Gussbauteil ausgebildeten Knotenelements, eingeschweißt. Bei dieser Art der Verbindung sind jedoch die zur exakten Anordnung des Trägerelements gegenüber dem Gussbauteil erforderliche mechanische Bearbeitung des Gussbauteils und die zu einem relativ hohen Wärmeverzug führende Schweißbearbeitung nachteilig.

Teilweise werden auch mehrere Gussteile verwendet, um ein Trägerelement in der gewünschten Position zu befestigen. Eine solche Lösung ist jedoch konstruktiv sehr aufwändig und teuer.

Es ist daher Aufgabe der vorliegenden Erfindung, eine Vorrichtung zur Verbindung eines Trägerelements mit einem Gussbauteil in einer Karosserie eines Kraftfahrzeugs zu schaffen, welche eine hohe Verbindungssteifigkeit aufweist, einfach und sicher herzustellen ist und eine hohe Genauigkeit hinsichtlich der Ausrichtung der beiden Teile gegeneinander ermöglicht.

Erfindungsgemäß wird diese Aufgabe durch die in Anspruch 1 genannten Merkmale gelöst.

Durch die erfindungsgemäße Aufnahme des Trägerelements an drei Seiten, also einer U-förmigen Einfassung desselben in das Gussbauteil, müssen bei der Anbringung des Trägerelements an dem Gussbauteil keine genauen Toleranzen eingehalten werden, so dass auf eine spanabhebende Bearbeitung des Gussbauteils verzichtet werden kann und eine kostengünstige Fertigung möglich ist. Der Verzicht auf ein vollständiges Umschließen des Trägerelements mit dem Gussbauteil durch die Öffnung desselben wird im Hinblick auf die Festigkeit der Verbindung durch den Deckel, welcher sowohl mit dem Gussbauteil als auch mit dem Trägerelement verbunden ist, kompensiert, so dass sich eine sehr stabile Verbindung zwischen dem Trägerelement und dem Gussbauteil ergibt, die im Crashfall eine hohe Steifigkeit aufweist.

Um in Crashfällen die auftretende Kraft noch besser aufnehmen zu können, ist gemäß der Erfindung vorgesehen, dass das Gussbauteil eine im Wesentlichen senkrecht zu der Längserstreckung des Trägerelements verlaufende Wandung als Abstützung für das Trägerelement aufweist.

Des Weiteren kann vorgesehen sein, dass der Deckel an einem weiteren, tragenden Bauteil der Karosserie angebracht ist. Durch eine derartige Verbindung des das Trägerelement mit dem Gussbauteil verbindenden Deckels mit einem weiteren, tragenden Karosseriebauteil kann eine zusätzliche Versteifung de Karosserie erreicht werden, welche somit in Crashfällen höhere Kräfte aufnehmen kann.

Weitere vorteilhafte Ausgestaltungen und Weiterbildungen der Erfindung ergeben sich aus den restlichen Unteransprüchen. Nachfolgend sind Ausführungsbeispiele der Erfindung anhand der Zeichnung prinzipmäßig dargestellt.

Es zeigt:
- Fig. 1: eine perspektivische Darstellung einer Ausführungsform der erfindungsgemäßen Vorrichtung;
- Fig. 2: eine weitere perspektivische Darstellung der erfindungsgemäßen Vorrichtung;
- Fig. 3: eine Seitenansicht der erfindungsgemäßen Vorrichtung;
- Fig. 4: eine Vorderansicht der Vorrichtung aus Fig. 1;
- Fig. 5: eine alternative Ausführungsform der Vorrichtung gemäß der Darstellung aus Fig. 4; und
- Fig. 6: eine Ansicht gemäß dem Pfeil VI aus Fig. 5.

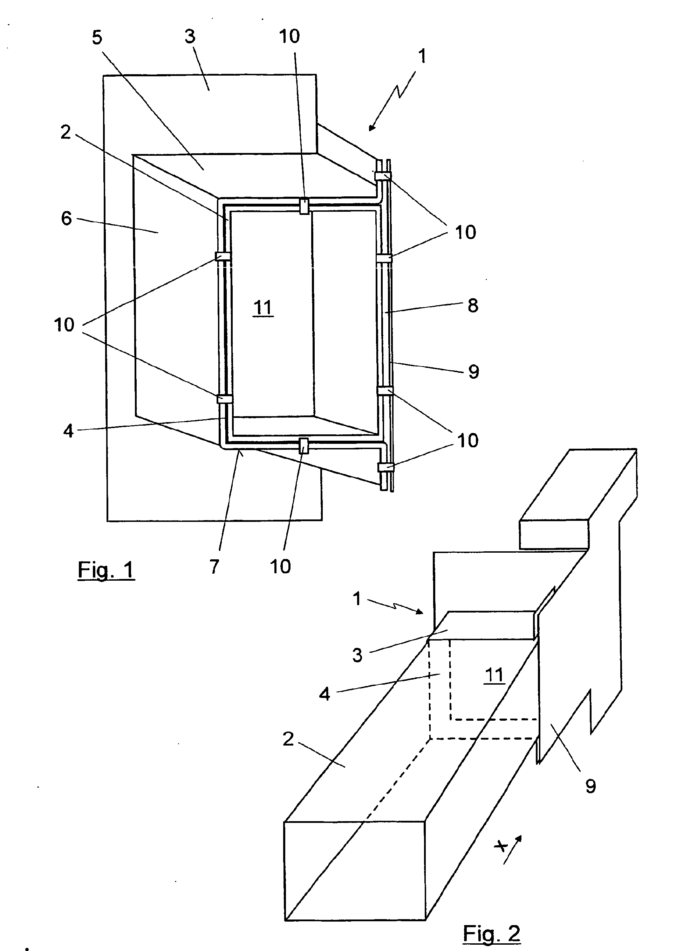

Fig. 1 zeigt eine Vorrichtung 1 zur Verbindung eines Trägerelements 2 mit einem als Knotenelement ausgebildeten Gussbauteil 3 in einer nicht dargestellten Karosserie eines ebenfalls nicht dargestellten Kraftfahrzeugs. Hierbei ist ein Abschnitt des Trägerelements 2 in einer Ausnehmung 4 des Gussbauteils 3 angeordnet. In der Darstellung gemäß Fig. 2 ist erkennbar, dass der weitaus größere Teil des Trägerelements 2 sich jedoch außerhalb des Gussbauteils 3 befindet. Die Ausnehmung 4 des Gussbauteils 3 ist an drei Seiten von jeweiligen Wandungen 5, 6 und 7 umgeben und weist an einer Seite eine Öffnung 8 auf. Dadurch kann das Trägerelement 2 sehr einfach in die Ausnehmung 4 des Gussbauteils 3 eingeführt werden. Wenn sich das Trägerelement 2 vollständig und in der gewünschten Position in der Ausnehmung 4 des Gussbauteils 3 befindet, wird die Öffnung 8 mittels eines Deckels 9 verschlossen. Nach der exakten Positionierung kann das Trägerelement 2 mittels geeigneter Verbindungselemente 10, die beispielsweise durch Schrauben gebildet werden können, mit dem Gussbauteil 3 verbunden werden. Dies ist sowohl vor als auch nach dem Verschließen der Öffnung 8 mittels des Deckels 9 möglich. Um eine steife Verbindung zwischen dem Trägerelement 2 und dem Gussbauteil 3 zu erreichen, ist der Deckel 9 sowohl mit dem Gussbauteil 3 als auch mit dem Trägerelement 2 verbunden, wozu wiederum die beispielsweise als Schrauben ausgebildeten Verbindungselemente 10 eingesetzt werden können. Statt Schrauben kommen auch andere Verbindungselemente 10 in Frage, die vorzugsweise auf kalter Verbindungstechnik basieren, wie beispielsweise Nieten oder Kleben. Allerdings ist auch ein Verschweißen des Trägerelements 2 mit dem Gussbauteil 3 und des Deckels 9 mit dem Trägerelement 2 und dem Gussbauteil 3 möglich.

Auf die beschriebene Art und Weise wird eine steife Verbindung zwischen dem Trägerelement 2 und dem Gussbauteil 3 erreicht, welche beim Einsatz in Karosserien von Kraftfahrzeugen auch im Crashfall, also wenn sehr hohe Kräfte auf das Trägerelement 2 und/oder das Gussbauteil 3 wirken, eine solche Festigkeit aufweist, dass Kräfte bis zu einer gewissen Höhe von diesen beiden Bauteilen aufgenommen werden können. Um die Kräfte von dem Trägerelement 2 auf das Gussbauteil 3 zu übertragen, ist neben den Verbindungselementen 10 auch eine dem Gussbauteil 3 zugeordnete, im Wesentlichen senkrecht zu der Längserstreckung des Trägerelements 2 verlaufende und einen hinteren Abschluss der Ausnehmung 4 bildende Wandung 11 vorgesehen, welche als Abstützung für das Trägerelement 2 dient, so dass das Trägerelement 2 bei einer entsprechenden Kraftbeaufschlagung in der in Fig. 2 mit "x" bezeichneten Richtung an der Wandung 11 anschlägt und die auf dasselbe einwirkende Kraft somit an das Gussbauteil 3 weitergibt. Die Steifigkeit des Trägerelements 2 kann erhöht werden, wenn dasselbe als Strangpressprofil ausgebildet ist. Statt als Strangpressprofil könnte das Trägerelement 2 auch als geschweißtes und/oder gebogenes Blechteil ausgebildet sein.

Des weiteren ist in Fig. 2 zu erkennen, dass der Deckel 9 nicht nur zum Verschließen der Ausnehmung 4 bzw. der Öffnung 8 des Gussbauteils 3 dient, sondern an einem weiteren, sehr schematisch dargestellten Bauteil der Karosserie angebracht ist, was eine weitere Versteifung des durch das Trägerelement 2 in das Gussbauteil 3 gebildeten Karosserieteils führt.

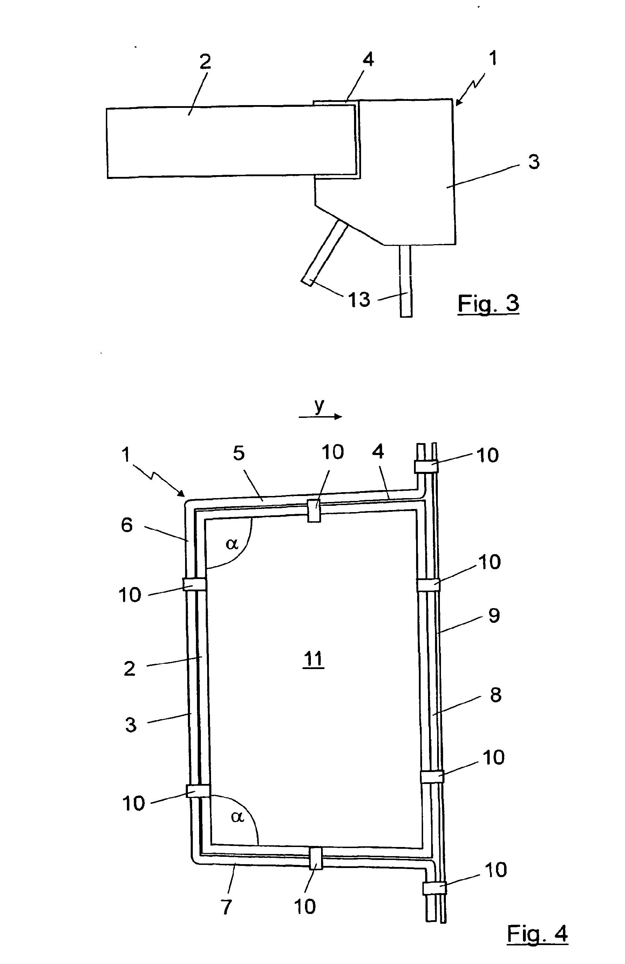

In der Seitenansicht gemäß Fig. 3 sind das Trägerelement 2 und das Gussbauteil 3 nochmals sehr schematisch dargestellt und es ist erkennbar, dass an dem Gussbauteil 3 weitere Bauteile 13 des Kraftfahrzeugs angebracht sind. Bei den Bauteilen 13 kann es sich beispielsweise um Stabilisatoren eines Fahrwerks des Kraftfahrzeugs handeln, es kommen jedoch auch andere Fahrzeugteile in Frage. Dadurch, dass für ein solches Knotenelement, an dem die verschiedensten Bauteile des Kraftfahrzeugs angebracht sind, das Gussbauteil 3 verwendet wird, können die zur Anbringung der verschiedenen Bauteile notwendigen Anschlüsse sehr einfach bereits beim Gießen des Gussbauteils 3 in dasselbe integriert werden und das Gussbauteil 3 kann so konstruiert werden, dass diese Bauteile möglichst einfach an demselben angebracht werden können. Aus Gewichtsgründen handelt es sich bei dem Gussbauteil 3 vorzugsweise um ein Leichtmetall-Gussteil, beispielsweise um ein Aluminiumgussteil. Um die Herstellung zu vereinfachen und eine hohe Steifigkeit des Gussbauteils 3 zu erreichen, kann es sich bei dem Gussbauteil 3 um ein Druckgussteil handeln. Das Gussbauteil 3 könnte jedoch auch durch Sandgießen hergestellt sein.

In Fig. 4 ist eine Vorderansicht einer Ausführungsform der Vorrichtung 1 dargestellt, bei welcher das Trägerelement 2 an sämtlichen Wandungen 5 der drei Seiten der Ausnehmung 4 des Gussbauteils 3 anliegt. Hierbei ist außerdem zu erkennen, dass die beiden mit "α" bezeichneten inneren Winkel des Trägerelements 2 größer als 90° sind und im vorliegenden Fall einen Winkel von ca. 91° bis 93° aufweisen. Dadurch wird das Trägerelement 2 an das Gussbauteil 3 angepasst, das an diesen Stellen ebenfalls von einem rechten Winkel abweichende innere Winkel aufweist. Der Grund für diese von dem rechten Winkel abweichenden Winkel des Gussbauteils 3, die ebenfalls zwischen 91° und 93° betragen können, liegt an der in Fig. 4 mit "y" bezeichneten Entformungsrichtung des Gussbauteils 3, wodurch sich eine Ausformschräge ergibt und die beiden Wandungen 5 und 7 jeweils nicht in einem rechten Winkel gegenüber der Wandung 6 ausgeführt werden können sondern schräg zu derselben verlaufen. Durch das Vorhandensein der Öffnung 8 kann das Gussbauteil 3 erheblich einfacher, nämlich in der Entformungsrichtung y, ausgeformt werden als in dem Fall, in dem die Ausnehmung 4 an allen vier Seiten geschlossen wäre.

Die Entformungsrichtung y des Gussbauteils 3 verläuft also quer zur Längsachse x des Trägerelements 2, wodurch ein prozesssicheres Einführen des Trägerelements 2 erreicht und auf eine zerspanende Bearbeitung des Gussbauteils 3 verzichtet werden kann. Gegebenenfalls könnte die Ausformschräge auch lediglich an einer der beiden Wandungen 5 oder 7 vorgesehen sei, wobei in diesem Fall ein größerer Winkel α von z. B. 92° bis 95° vorteilhaft wäre.

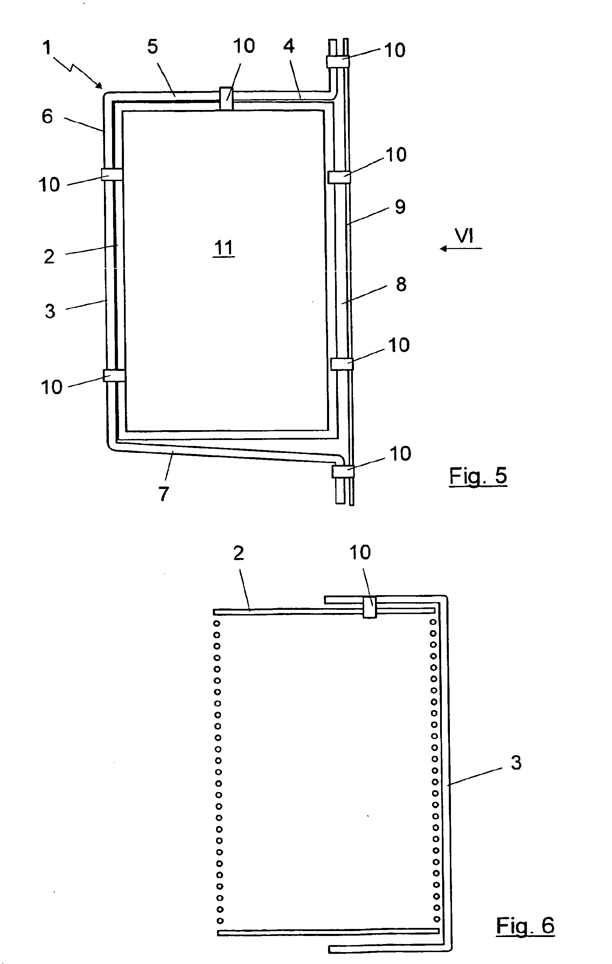

Bei der alternativen Ausführungsform der Vorrichtung 1 gemäß der Figuren 5 und 6 weist das Trägerelement 2 von der Wandung 7 der Ausnehmung 4 des Gussbauteils 3 einen Abstand auf und das Trägerelement 2 ist nicht mit der Wandung 7 verbunden. Im Crashfall dient die Wandung 7 als Anschlag für das Trägerelement 2. Bei dieser Ausführungsform kann auf die Anpassung des Winkels a des Trägerelements 2 an den durch die Ausformschräge entstehenden, von 90° abweichenden Winkel des Gussbauteils 3 verzichtet werden.

Statt der U- bzw. C-förmigen Ausführung des Gussbauteils 3 im Bereich der Ausnehmung 4 mit den Wandungen 5, 6 und 7 wäre es auch möglich, mehr als die drei Wandungen 5, 6, 7 vorzusehen oder die Ausnehmung 4 mit einer runden oder ovalen Wandung zu umschließen. Auch in diesem Fall würde die Ausnehmung 4 an lediglich einer Seite die Öffnung 8 aufweisen. Dasselbe gilt auch für eine dreieckige Ausgestaltung der Ausnehmung 4, welche dann zwei Wandungen und wiederum die eine Öffnung 8 aufwiese.

In den dargestellten Ausführungsbeispielen sind das Trägerelement 2 und das Gussbauteil vorzugsweise im vorderen Bereich der Karosserie angeordnet, es wäre jedoch auch möglich, die Vorrichtung 1 bei in einem seitlichen Bereich, beispielsweise dem Schwellerbereich, oder einem hinteren Bereich des Kraftfahrzeugs angeordneten Bauteilen vorzusehen.

## Patentansprüche

1. Vorrichtung (1) zur Verbindung eines Trägerelements (2) mit einem Gussbauteil (3) in einer Karosserie eines Kraftfahrzeugs, wobei ein Abschnitt des Trägerelements (2) in einer Ausnehmung (4) des Gussbauteils (3) angeordnet ist, wobei die Ausnehmung (4) des Gussbauteils (3) an drei Seiten von jeweiligen Wandungen (5,6,7) des Gussbauteils (3) umgeben ist und an einer Seite eine Öffnung (8) aufweist, wobei das Trägerelement (2) an wenigstens zwei Wandungen (5,6,7) mit dem Gussbauteil (3) verbunden ist, wobei die Öffnung (8) mittels eines Deckels (9) verschlossen ist, und wobei der Deckel (9) sowohl mit dem Gussbauteil (3) als auch mit dem Trägerelement (2) verbunden ist,
**dadurch gekennzeichnet, dass**
das Gussbauteil (3) eine im Wesentlichen senkrecht zu der Längserstreckung des Trägerelements (2) verlaufende Wandung (11) als Abstützung für das Trägerelement (2) aufweist.

2. Vorrichtung nach Anspruch 1,
**dadurch gekennzeichnet, dass**
der Deckel (9) an einem weiteren, tragenden Bauteil der Karosserie angebracht ist.

3. Vorrichtung nach Anspruch 1 oder 2,
**dadurch gekennzeichnet, dass**
das Trägerelement (2) an sämtlichen Wandungen (5,6,7) der drei Seiten der Ausnehmung (4) des Gussbauteils (3) anliegt.

4. Vorrichtung nach Anspruch 1 oder 2,
**dadurch gekennzeichnet, dass**
das Trägerelement (2) von einer der Wandungen (5,6,7) der drei Seiten der Ausnehmung (4) des Gussbauteils (3) einen Abstand aufweist.

5. Vorrichtung nach einem der Ansprüche 1 bis 4,
**dadurch gekennzeichnet, dass**
das Trägerelement (2) mittels Schraubverbindungen mit dem Gussbauteil (3) verbunden ist.

6. Vorrichtung nach einem der Ansprüche 1 bis 5,
**dadurch gekennzeichnet, dass**
der Deckel (9) mittels Schraubverbindungen mit dem Gussbauteil (3) und dem Trägerelement (2) verbunden ist.

7. Vorrichtung nach einem der Ansprüche 1 bis 6,
**dadurch gekennzeichnet, dass**
das Trägerelement (2) als Strangpressprofil ausgebildet ist.

8. Vorrichtung nach einem der Ansprüche 1 bis 7,
**dadurch gekennzeichnet, dass**
das Gussbauteil (3) als Leichtmetall-Druckgussteil ausgebildet ist.

## Claims

1. Device (1) for connecting a carrier element (2) to a cast component (3) in a motor vehicle body, a portion of the carrier element (2) being arranged in a recess (4) of the cast component (3), the recess (4) of the cast component (3) being surrounded on three sides by respective walls (5, 6, 7) of the cast component (3) and comprising an opening (8) on one side, the carrier element (2) being connected to the cast component (3) at at least two walls (5, 6, 7), the opening (8) being closed by means of a cover (9), and the cover (9) being connected to both the cast component (3) and the carrier element (2), **characterised in that** the cast component (3) comprises a wall (11) which extends substantially perpendicular to the longitudinal extension of the carrier element (2) and acts as a support for the carrier element (2).

2. Device according to claim 1, **characterised in that** the cover (9) is arranged on another load-bearing component of the body.

3. Device according to either claim 1 or claim 2, **characterised in that** the carrier element (2) abuts all walls (5, 6, 7) of the three sides of the recess (4) of the cast component (3).

4. Device according to either claim 1 or claim 2, **characterised in that** the carrier element (2) is spaced apart from one of the walls (5, 6, 7) of the three sides of the recess (4) of the cast component (3).

5. Device according to any of claims 1 to 4, **characterised in that** the carrier element (2) is connected to the cast component (3) by means of screw connections.

6. Device according to any of claims 1 to 5, **characterised in that** the cover (9) is connected to the cast component (3) and to the carrier element (2) by means of screw connections.

7. Device according to any of claims 1 to 6, **characterised in that** the carrier element (2) is formed as an extruded profile.

8. Device according to any of claims 1 to 7, **characterised in that** the cast component (3) is formed as a light-metal die-cast part.

## Revendications

1. Dispositif (1) pour assembler un élément porteur (2) à une pièce moulée (3) dans une carrosserie d'un véhicule automobile, une partie de l'élément porteur (2) étant placée dans un évidement (4) de la pièce moulée (3), l'évidement (4) de la pièce moulée (3) étant entouré sur trois côtés par des parois respectives (5, 6, 7) de la pièce moulée (3) et comportant sur un côté une ouverture (8), l'élément porteur (2) étant assemblé par au moins deux parois (5, 6, 7) à la pièce moulée (3), l'ouverture (8) étant fermée au moyen d'un couvercle (9) et le couvercle (9) étant assemblé aussi bien à la pièce moulée (3) qu'à l'élément porteur (2),
**caractérisé en ce que** la pièce moulée (3) comporte comme soutien pour l'élément porteur (2) une paroi (11) qui s'étend globalement perpendiculairement à la direction longitudinale de l'élément porteur (2).

2. Dispositif selon la revendication 1, **caractérisé en ce que** le couvercle (9) est agencé sur une autre pièce porteuse de la carrosserie.

3. Dispositif selon la revendication 1 ou 2, **caractérisé en ce que** l'élément porteur (2) repose contre toutes les parois (5, 6, 7) des trois côtés de l'évidement (4) de la pièce moulée (3).

4. Dispositif selon la revendication 1 ou 2, **caractérisé en ce que** l'élément porteur (2) se trouve à une certaine distance de l'une des parois (5, 6, 7) des trois côtés de l'évidement (4) de la pièce moulée (3).

5. Dispositif selon l'une des revendications 1 à 4, **caractérisé en ce que** l'élément porteur (2) est assemblé à la pièce moulée (3) au moyen d'assemblages par vis.

6. Dispositif selon l'une des revendications 1 à 5, **caractérisé en ce que** le couvercle (9) est assemblé à la pièce moulée (3) et à l'élément porteur (2) au moyen d'assemblages par vis.

7. Dispositif selon l'une des revendications 1 à 6, **caractérisé en ce que** l'élément porteur (2) est conçu comme un profilé filé.

8. Dispositif selon l'une des revendications 1 à 7, **caractérisé en ce que** la pièce moulée (3) est conçue comme une pièce moulée sous pression en métal léger.
